# EUROPEAN PATENT SPECIFICATION

(11) **EP 2 290 437 B1**
(45) Date of publication and mention of the grant of the patent: **11.12.2013**
(21) Application number: 09769981.3
(22) Date of filing: 29.05.2009
(51) Int. Cl.: G02F 1/1343, G02F 1/1337

(54) **LIQUID CRYSTAL DISPLAY DEVICE**
FLÜSSIGKRISTALLANZEIGEVORRICHTUNG
DISPOSITIF D'AFFICHAGE À CRISTAUX LIQUIDES

(30) Priority: 27.06.2008 JP 2008168593
(43) Date of publication of application: 02.03.2011
(73) Proprietor: Sharp Kabushiki Kaisha, Osaka-shi, Osaka 545-8522 (JP)
(72) Inventor: ISHIHARA, Shoichi, Osaka-shi Osaka 545-8522 (JP); KOZAKI, Shuichi, Osaka-shi Osaka 545-8522 (JP); SAKURAI, Takehisa, Osaka-shi Osaka 545-8522 (JP); MURATA, Mitsuhiro, Osaka-shi Osaka 545-8522 (JP)
(74) Representative: Müller - Hoffmann & Partner
(86) International application number: PCT/JP2009/059899
(87) International publication number: WO 2009/157271

(56) References cited:
- JP-A- 10 186 351
- JP-A- 10 186 351
- JP-A- 11 326 955
- JP-A- 2000 081 641
- JP-A- 2001 209 063
- US-A- 6 111 627
- US-A- 6 128 061
- US-A1- 2007 040 978
- US-A1- 2008 100 787
- US-B1- 6 525 798
- US-B1- 6 700 558

## Description

### TECHNICAL FIELD

The present invention relates to a liquid crystal display device. The present invention specifically relates to a liquid crystal display device suitable for a display mode in which a liquid crystal layer is bend-distorted by applying a voltage and thereby controlling light transmission.

### BACKGROUND ART

Liquid crystal display devices are characterized in their slimness, light weight, and low power consumption, and are used in various fields. The display performance thereof has been extremely improved as the time has passed; now, the liquid crystal displays is surpassing cathode-ray tubes (CRT) in display performance.

The display mode of a liquid crystal display device is determined according to how the liquid crystal is aligned in the cell. Various display modes for the liquid crystal display devices are conventionally known, and examples thereof include the twisted nematic (TN) mode, multi-domain vertical alignment (MVA) mode, in-plane switching (IPS) mode, and optically self-compensated birefringence (OCB) mode.

The liquid crystal display devices of these display modes are mass-produced. In particular, the TN liquid crystal display devices are very commonly used. The TN liquid crystal display devices, however, give a slow response and a narrow viewing angle; thus, the TN-mode devices would be susceptible to improvement in these respects.

In the MVA mode, slits are formed on pixel electrodes of an active matrix substrate, and protrusions (ribs) for controlling the alignment of liquid crystal molecules are formed on common electrodes of the opposite substrate. Such a structure generates a fringe field, and the fringe field scatters the alignment of the liquid crystal molecules in multiple directions (see Non-Patent Documents 1 and 2). The MVA mode achieves a wide viewing angle by distributing the direction toward which the liquid crystal molecules lean into multiple directions (multi-domain) when a voltage is applied.
In addition, the MVA mode is a vertical alignment mode. Thus, it achieves a higher contrast than the TN, IPS, and OCB modes. However, the production process thereof is complicated, and this mode also gives a slow response as in the case of the TN mode; thus, the MVA mode would be susceptible to improvement in these respects.

In order to solve these problems in the process of the MVA mode, another display mode has been proposed in which a p-type nematic liquid crystal is used as a liquid crystal material, and a transverse electric field drives liquid crystal molecules to define the direction of aligning the liquid crystal molecules while maintaining high contrast owing to vertical alignment (see Patent Documents 1 to 6). Such a mode does not require the control of alignment by protrusions, and thereby has a simple pixel structure and excellent viewing angle characteristics. In contrast, it has serious problems such as a high driving voltage and low light transmissivity. Further, this mode may cause deterioration in characteristics at dark zones in gradation scales.

The IPS mode is a display mode which achieves a wide viewing angle with a simpler structure. In this mode, liquid crystal molecules are switched in-plane, and thereby a very wide viewing angle is achieved (see Non-Patent Documents 3 and 4). However, the IPS mode also gives a slow response as in the case of the TN and MVA modes; thus, it would be susceptible to improvement in this respect. In addition, the IPS mode is not suitable for mobile devices and vehicle-mounted devices which require rapid performance at low temperatures.

The OCB mode is the only display mode, among the aforementioned various display modes, that achieves a rapid response with a simple structure such that a nematic liquid crystal is disposed between two substrates subjected to aligning-treatment in the direction parallel to each other (see Non-Patent Documents 5 and 6). Thus, the OCB mode receives attention particularly in applications such as vehicle-mounted devices which require good responsiveness at low temperatures.

The OCB mode, however, requires transition from the splay alignment (initial alignment) to the bend alignment (alignment upon driving) when power is applied, while it gives rapid responsiveness. Thus, the OCB mode requires a driver circuit for initial transition in addition to a normal driver circuit, and may cause an increase in cost. Further, the viewing angle characteristics thereof are inferior to those of the MVA and IPS modes; thus; the OCB mode would be susceptible to improvement in these respects.

### [Patent Document 1]

Japanese Kokai Publication S57-618

### [Patent Document 2]

Japanese Kokai Publication H10-186, 351

### [Patent Document 3]

Japanese Kokai Publication H10-333,171

### [Patent Document 4]

Japanese Kokai Publication H11-24,068

### [Patent Document 5]

Japanese Kokai Publication 2000-275,682

### [Patent Document 6]

Japanese Kokai Publication 2002-55,357

### [Non-Patent Document 1]

K. Ohmuro, S. Kataoka, T. Sasaki, and Y. Koike, "Development of Super-High-Image-Quality Vertical-Alignment-Mode LCD", SID 1997 Digest, 1997, No. 33.3, p. 845-848

### [Non-Patent Document 2]

H. Yoshida, T. Kamada, K. Ueda, R. Tanaka, T. Koike, K. Okamoto, P. L. Chen and J. Lin, "Multi-domain Vertically Aligned LCDs with Super-wide Viewing Range for Gray-scale Images", Asia Display/IMID'04 Digest, 2004, No. 12.2, p. 198-201

### [Non-Patent Document 3]

R. A. Soref, "Field Effects in Nematic Liquid Crystals Obtained with Interdigital Electrodes", J. Appl. Phys., 1974, Vol. 45, No. 12, p. 5466-5468

### [Non-Patent Document 4]

K. Kiefer, B. Weber, F. Windschield, and G. Baur, "In-Plane Switching of Nematic Liquid Crystals", Proc. The 12th Int'l Disp. Res. Conf. (Japan Display'92), 1992, No. P2-30, p. 547-550

### [Non-Patent Document 5]

P. L. Bos and J. A. Rahman, "An Optically "Self-Compensating" Electro-Optical Effect with Wide Angle of View", 1993, Technical Digest of SID Symp., p. 273-276

### [Non-Patent Document 6]

Y. Yamaguchi, T. Miyashita, and T. Uchida, "Wide-Viewing-Angle Display Mode for the Active-Matrix LCD Using Bend-Alignment Liquid-Crystal Cell", Technical Digest of SID Symp., 1993, p. 277-280

JP 10 186351 A describes a liquid crystal display device provided with one pair of substrates, a liquid crystal composition having positive dielectric constant anisotropy, orientation control films orienting optical axes of liquid crystal molecules being in the liquid crystal composition roughly vertically with respect to the substrates, one pair of electrode structure generating an electric field roughly parallel with surfaces of the one pair of the substrates and one pair of polarizing plates in which the angle between an electric field component parallel with the surfaces of the substrates and the light transmission axis of one side is roughly 45 degrees and the light transmission axis of other side is positioned in crossed Nicols at roughly 90 degrees with the light transmission axis of one side and then the transmissivity of the light transmitting the liquid crystal composition is modulated with the electric field.

US 6 700 558 B1 describes a switching electrode connected to a switching element provided on a first substrate. An opposing electrode, an insulation film, and a plurality of sub electrodes are provided on a second substrate. Moreover, a resistant film is provided on a first substrate. A switching electrode which is connected to the switching element and an electrode which is not connected to the switching element are provided on the resistant film. An opposing electrode which is not connected to the switching element is provided on the second substrate. Furthermore, a first electrode which is connected to a first switching element and a third electrode which is not connected to the switching element are provided on the first substrate. The first and third electrodes are opposed to the second electrode, which is connected to a second switching element, via an insulator. The opposing electrode which is not connected to the switching element is provided on the second substrate.

US 6 128 061 A describes a liquid crystal display preventing color shift. The liquid crystal display comprises: a liquid crystal layer having a plurality of liquid crystal molecules; a lower substrate disposed at one side of the liquid crystal layer and having a sub pixel defined by crossing a gate bus line and a data bus line at an interface with said liquid crystal layer and further having a counter electrode and a pixel electrode for driving the liquid crystal molecules within each sub pixel; and an upper substrate disposed at the other side of the liquid crystal layer and having a color filter, wherein an electric field parallel to the surface of the substrate and the gate bus line and an electric field parallel to the data bus line are simultaneously formed when a voltage is applied to the counter electrode and the pixel electrode.

US 6 525 798 B1 describes a liquid crystal display unit including a plurality of pixels each including a plurality of common electrodes, a plurality of pixel electrodes, and a semiconductor switching element, a plurality of scanning signal lines, a plurality of video signal lines for outputting signals to the pixel electrodes. The display further includes an array substrate having the pixels, the scanning signal lines, and the video signal lines arranged on a surface thereof, a counter substrate arranged opposite the array substrate, and a liquid crystal layer sandwiched between the array substrate and the counter substrate, wherein each of the pixels includes a plurality of electrode pairs.

US 6 111 627 A describes an IPS-LCD having an electrode for preventing a static electricity generated from an upper substrate, comprising: a lower and an upper substrates arranged oppositely and being spaced in a selected distance; a liquid crystal layer having liquid crystal molecules sandwiched between the lower and the upper substrates; a counter electrode and a pixel electrode formed on an inner surface of the lower substrate, the counter electrode being supplied with a common signal, the counter and pixel electrodes for generating the electric field for driving the liquid crystal molecules; and an electrode for preventing a static electricity formed on the portion of the upper substrate which corresponds to the counter electrode, the electrode being supplied with the common signal.

US 2008/100787 A1 describes a liquid crystal display device including a substrate, an insulating layer, an upper electrode layer, and a lower electrode layer. The upper electrode layer and the lower electrode layer are formed on the same substrate via the insulating layer. A plurality of openings are formed in the upper electrode layer and arranged parallel to each other so that an electric field is passed therethrough. Liquid crystal molecules are driven by applying voltage between the upper electrode layer and the lower electrode layer. A minor axis of each of the openings has a width in a range in which a V-T curve, which represents a relationship between voltage and transmittance ratio, does not shift with variation in the width of the minor axis.

US 2007/040978 A1 describes a liquid crystal display device which exhibits excellent wide viewing angle characteristic and high-speed responsiveness. A pixel region includes a switching element which is operated in response to a scanning signal from a gate signal line, a pixel electrode to which a video signal from a drain signal line is supplied through a switching element, and a counter electrode which generates an electric field between the counter electrode and the pixel electrode. The pixel region is constituted of divided respective regions. In one region, the counter electrode made of a light-transmitting material which is formed on the center except for a slight periphery of the region below an insulation film and the pixel electrode which is constituted of a group of electrodes which extend in one direction and are arranged in parallel to each other in the direction which intersects one direction above the insulation film in a state that the group of electrodes are overlapped to the counter electrode are formed.

### DISCLOSURE OF THE INVENTION

As mentioned above, no invention has been made which can achieve rapid responsiveness, wide-viewing-angle characteristics, and high-contrast characteristics in the fields of liquid crystal panels and liquid crystal display devices. In addition, no liquid crystal panel and liquid crystal display device has been invented which do not require operation for initial bend transition and which achieve practical bend alignment.

The present invention is devised in order to solve the above problems. An object of the present invention is to provide a liquid crystal display device which can achieve excellent wide-viewing-angle characteristics and rapid responsiveness and also can perform display by a display mode that does not require operation for initial bend transition.

The present inventors have variously studied the liquid crystal display device which can achieve excellent wide-viewing-angle characteristics and rapid responsiveness and also can perform display by a display mode that does not require operation for initial bend transition. Thereby, they have focused on a display mode in which a p-type nematic liquid crystal is used as a liquid crystal material and a transverse electric field drives liquid crystal molecules to define the direction of aligning the liquid crystal molecules while maintaining high-contrast characteristics owing to vertical alignment. As a result, the present inventors have found that a novel display mode, which can achieve excellent wide-viewing-angle characteristics equivalent to those of the MVA and IPS modes and rapid responsiveness equivalent to or higher than that of the OCB mode and which does not require operation for initial bend transition, can be provided under the conditions that a comb-shaped electrode satisfies the relationship (S+1.7)/(S+L) ≥ 0.7, wherein L represents an electrode width and S represents an electrode spacing, and that a pixel has a first region and a second region which has a ratio S/L between the electrode width L and the electrode spacing S different from that of the first region. Finally, the present inventors have arrived at and completed the present invention that can solve the aforementioned problems.
The above objects are solved by the claimed matter according to the independent claims.

One aspect of the present invention is a liquid crystal display device, comprising: two substrates at least one of which is transparent; and a p-type nematic liquid crystal disposed between the two substrates, the p-type nematic liquid crystal being aligned perpendicular to the surfaces of the two substrates when no voltage is applied, at least one of the two substrates having a comb-shaped electrode, and the comb-shaped electrode satisfying the relationship (S+1.7)/(S+L) ≥ 0.7, wherein L represents an electrode width and S represents an electrode spacing (hereinafter, also referred to as the "first liquid crystal display device of the present invention").

Thereby, excellent wide-viewing-angle characteristics and rapid responsiveness can be achieved and display can be performed by a display mode that does not require operation for initial bend transition. In addition, a high transmissivity and a high contrast can be achieved.

The configuration of the first liquid crystal display device of the present invention is not especially limited as long as it essentially includes such components. The first liquid crystal display device of the present invention may or may not include other components.

Another aspect of the present invention is a liquid crystal display device, comprising: two substrates at least one of which is transparent; and a p-type nematic liquid crystal disposed between the two substrates, the p-type nematic liquid crystal being aligned perpendicular to the surfaces of the two substrates when no voltage is applied, at least one of the two substrates having a comb-shaped electrode, and a pixel having a first region; and a second region which has a ratio S/L between an electrode width L and an electrode spacing S of the comb-shaped electrode different from that of the first region (hereinafter, also referred to as the "second liquid crystal display device of the present invention").

Thereby, excellent wide-viewing-angle characteristics and rapid responsiveness can be achieved and display can be performed by a display mode that does not require operation for initial bend transition. In addition, characteristics at dark zones of gradation scales can be improved.

The configuration of the second liquid crystal display device of the present invention is not especially limited as long as it essentially includes such components. The second liquid crystal display device of the present invention may or may not include other components.

In the first and second liquid crystal display devices of the present invention, the term "perpendicular" herein does not necessarily mean strict perpendicularity, and includes substantial perpendicularity in view of the effects of the present invention. Specifically, the pre-tilt angle in the liquid crystal display devices is preferably 88° or more. The angle defined by this term may have an error which occurs in the production process.

The first and second liquid crystal display devices of the present invention may perform black-and-white display or may perform color display. In the case of color display, each pixel (the smallest unit constituting a displayed image) generally consists of multiple (e.g. three) dots (a single-color region, sub-pixel) each having a different color. Thus, in the case that the first and second liquid crystal display devices of the present inventions are used for a color liquid crystal display device, the term "pixel" may also be regarded as the term "dot" in general.

Preferable embodiments of the first and second liquid crystal display devices of the present invention are mentioned in more detail below. The following embodiments may be employed in combination.

In order to improve characteristics at dark zones of gradation scales, a pixel of the first liquid crystal display device of the present invention preferably has a first region and a second region which has a ratio S/L between the electrode width L and the electrode spacing S different from that of the first region.

In one pixel of the first and second liquid crystal display devices of the present invention, the number of regions each having a different ratio S/L is not particularly limited. Three or more regions each having a different ratio S/L may be disposed therein.
As mentioned here, a pixel of the first and second liquid crystal display devices of the present invention may have multiple regions each having a different ratio S/L between the electrode width L and the electrode spacing S.

In order to achieve a high transmissivity and a high contrast, the electrode width L and the electrode spacing S preferably satisfy the relationship (S+1.7)/(S+L) ≥ 0.7 (hereinafter, also referred to as formula (1)) in the second liquid crystal display device of the present invention.

As mentioned here, the first liquid crystal display device of the present invention and the second liquid crystal display device of the present invention may be employed in combination.

In the first and second liquid crystal display devices of the present invention, the electrode width L and the electrode spacing S more preferably satisfy the relationship (S+1.7)/(S+L) ≥ 0.8. Thereby, the display devices can have brightness equivalent to that of the current MVA-mode devices without additional members for improving brightness such as a brightness-enhancing film of a backlight.

In the first and second liquid crystal display devices of the present invention, the electrode width L and the electrode spacing S further preferably satisfy the relationship (S+1.7)/(S+L) ≥ 0.9 (hereinafter, also referred to as formula (2)). Thereby, the display devices can have brightness equivalent to that of the current MVA-mode devices even though the number of light sources themselves is reduced or the brightness of the light source itself is lowered, as well as the number of the additional members is reduced.

In addition to the first region and the second region, the first and second liquid crystal display devices of the present invention may further have one or more regions where at least one of the electrode width L and the electrode spacing S is different from those of the first region and the second region.

The first region or the second region preferably has an opening area occupying 50% or more of a pixel opening area. Thereby, the opening area of the first region can be made to have a different size of the opening area of the second region. Thus, occurrence of dead space in a pixel can be effectively reduced.

As mentioned here, in the first and second liquid crystal display devices of the present invention, a pixel may have multiple regions each having a different ratio S/L between the electrode width L and the electrode spacing S, and at least one region among the multiple regions may have an opening area occupying 50% or more of a pixel opening area.

In order to more surely achieve excellent display characteristics, especially rapid responsiveness and a high transmissivity, the electrode width L and the electrode spacing S preferably satisfy the relationship S/L ≤ 3.75 (hereinafter, also referred to as formula (3)).

In order to more surely achieve excellent display characteristics, especially a high transmissivity, the electrode spacing S is preferably 3 µm (more preferably 3.5 µm) or greater.

In order to more surely achieve excellent display characteristics, especially rapid responsiveness, the electrode spacing S is preferably 10 µm (more preferably 8.5 µm) or smaller.

Assuming that the electrode spacing S has an upper limit of about 10 µm, the formula (S+1.7)/(S+L) ≥ 0.7 is satisfied when the electrode width L satisfies L ≤ 6.7 as is calculated from the formula (10+1.7)/(10+L) ≥ 0.7. Thus, the electrode width L is preferably about 7 µm or smaller.

Similarly assuming that the electrode spacing S has an upper limit of about 10 µm, the formula (S+1.7)/(S+L) ≥ 0.8 is satisfied when the electrode width L satisfies L ≤ 4.6 as is calculated from the formula (10+1.7)/(10+L) ≥ 0.8. Thus, the electrode width L is preferably about 5 µm or smaller.

In order to more surely achieve excellent display characteristics, especially rapid responsiveness and a high transmissivity, the electrode width L is preferably 4 µm (more preferably 3.5 µm) or smaller. In other words, the electrode width L preferably satisfies L ≤ 4 µm (hereinafter, also referred to as formula (4)).

In order to reduce occurrence of breaks in wire, that is, in order to satisfy the restriction in the production process, the electrode width L is preferably 2 µm (more preferably 2.5 µm) or greater. In other words, the electrode width L preferably satisfies L ≥ 2 µm (hereinafter, also referred to as formula (5)).

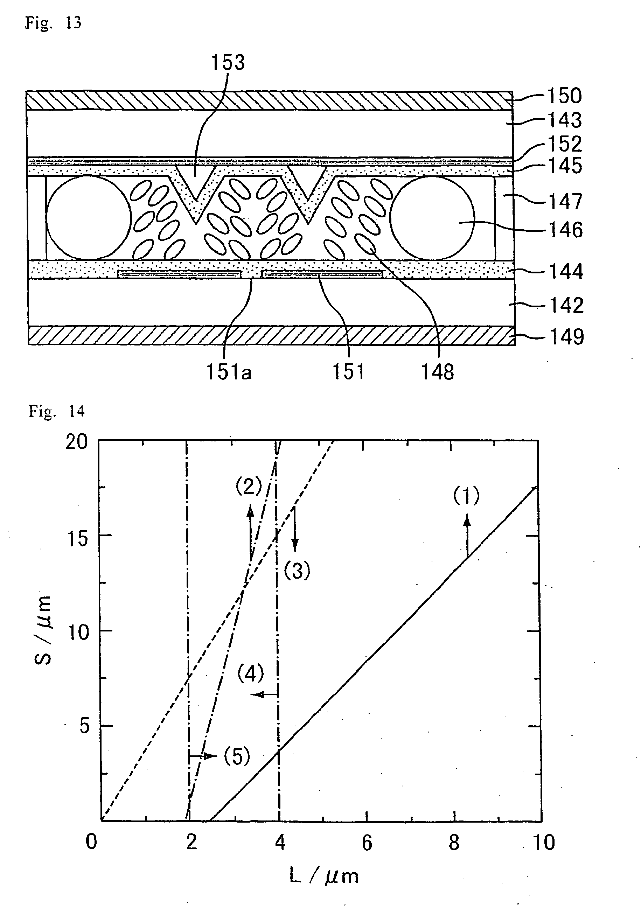

Here, the relationship among formulas (1) to (5) is shown in Fig. 14.

In order to reduce occurrence of short circuits, the comb-shaped electrode may have a common electrode group and a pixel electrode group, and the common electrode group and the pixel electrode group may be disposed via an insulating layer.

In order to lower a voltage, that is, to achieve low-voltage driving, the p-type nematic liquid crystal preferably has a dielectric anisotropy Δε of 10 (more preferably 15) or higher.

### EFFECT OF THE INVENTION

The liquid crystal display devices of the present invention can achieve excellent wide-viewing-angle characteristics and rapid responsiveness and also can perform display by a display mode that does not require operation for initial bend transition.
Specifically, the comb-shaped electrode satisfying the relationship (S+1.7)/(S+L) ≥ 0.7, wherein L represents the electrode width and S represents the electrode spacing, enables achievement of wide-viewing-angle characteristics equivalent to those of the MVA and IPS modes, rapid responsiveness equivalent to or higher than that of the OCB mode, a high transmissivity, and a high contrast.
Further, at least two regions (the first region and the second region) each having a different ratio S/L between the electrode width L and the electrode spacing S disposed in one pixel enable achievement of wide-viewing-angle characteristics equivalent to those of the MVA and IPS modes, rapid responsiveness equivalent to or higher than that of the OCB mode, and improvement in characteristics at dark zones of gradation scales.

### BRIEF DESCRIPTION OF THE DRAWINGS

[Fig. 1]

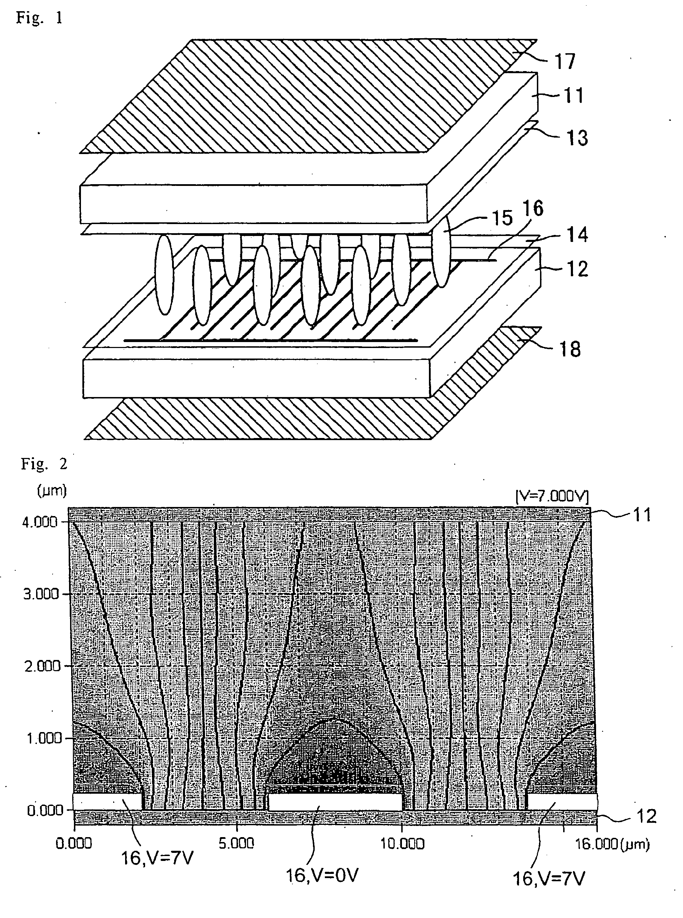

   Fig. 1 is a schematic perspective view showing the basic structure of the liquid crystal display device of Embodiment 1.
[Fig. 2]
   Fig. 2 is a cross-sectional view showing one example of a potential distribution in a cell when a voltage is applied to the liquid crystal display device of Embodiment 1.
[Fig. 3]

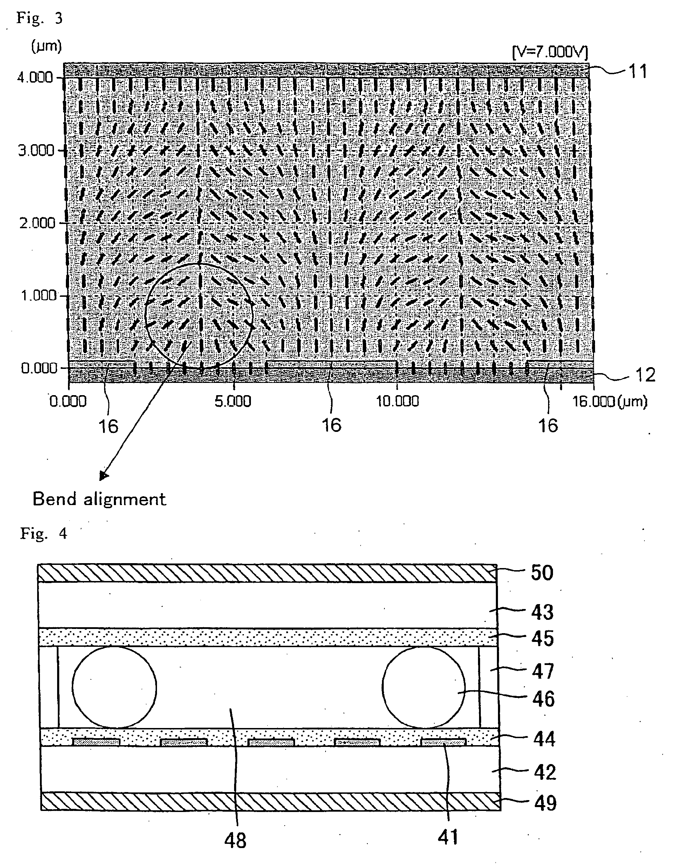

   Fig. 3 is a cross-sectional view showing one example of a liquid crystal alignment distribution when a voltage is applied to the liquid crystal display device of Embodiment 1.
[Fig. 4]
   Fig. 4 is a cross-sectional view showing the basic structure of the liquid crystal display element of Example 1.
[Fig. 5]

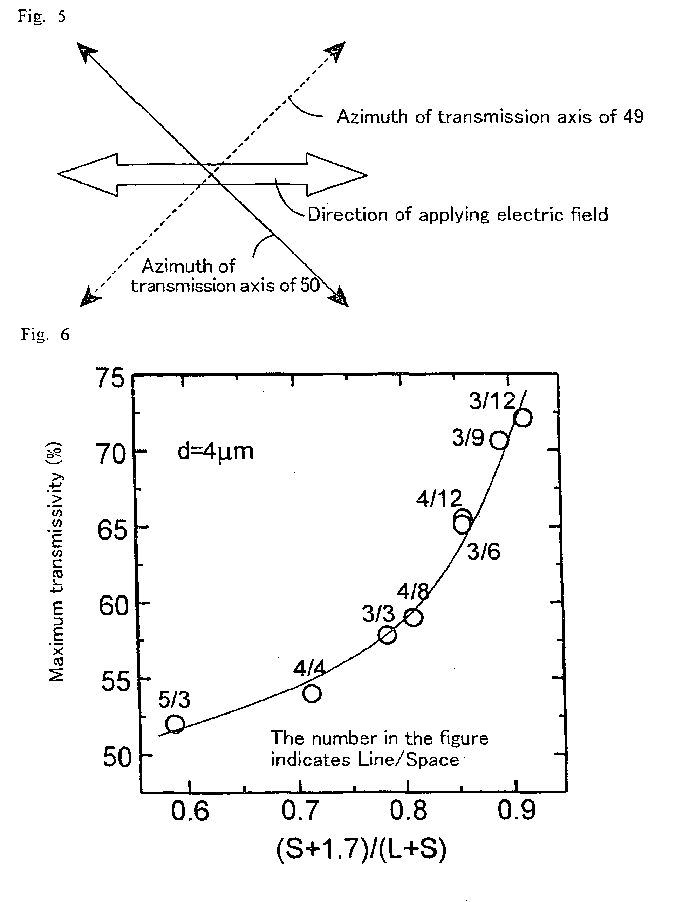

   Fig. 5 is a plan view for describing the azimuths of the transmission axes and the direction of applying an electric field in the liquid crystal display device of Example 1.
[Fig. 6]
   Fig. 6 is a graph showing the relationship of the electrode width and electric distance vs. the maximum transmissivity in the liquid crystal display device of Example 1.
[Fig. 7]

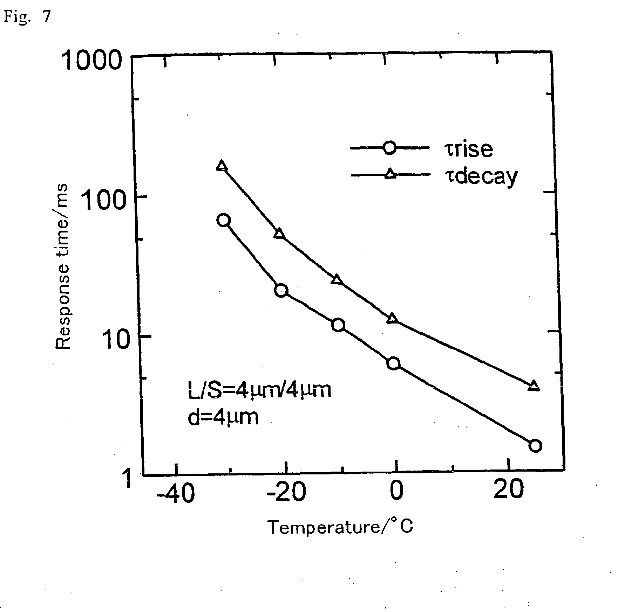

   Fig. 7 is a graph showing the temperature dependency of responsiveness in the liquid crystal display device of Example 1.
[Fig. 8]

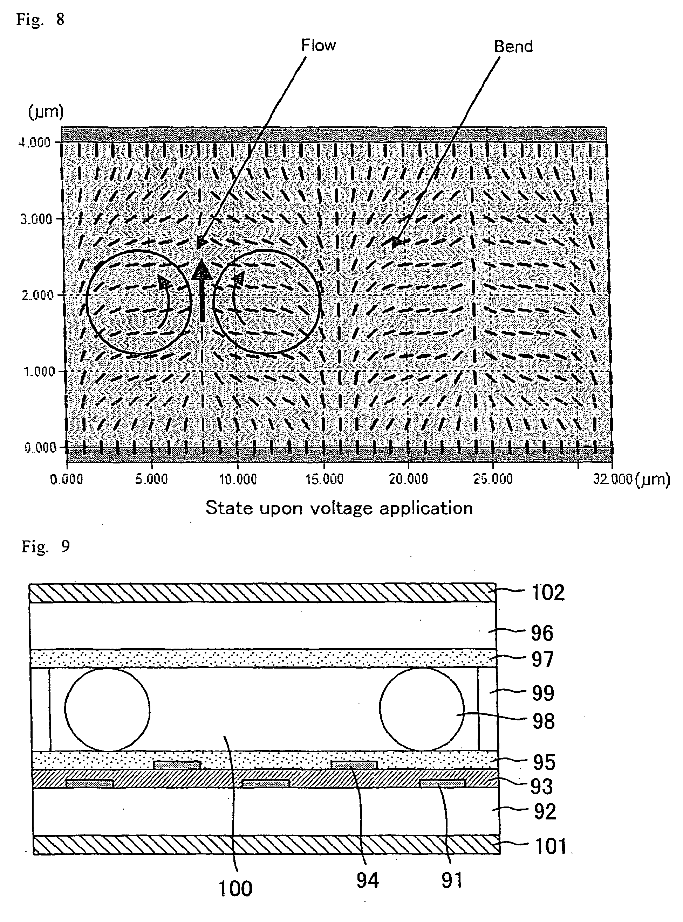

   Fig. 8 is a schematic cross-sectional view for describing rapid responsiveness of the liquid crystal display device of Embodiment 1.
[Fig. 9]
   Fig. 9 is a schematic cross-sectional view showing the basic structure of the liquid crystal display device of Example 3.
[Fig. 10]

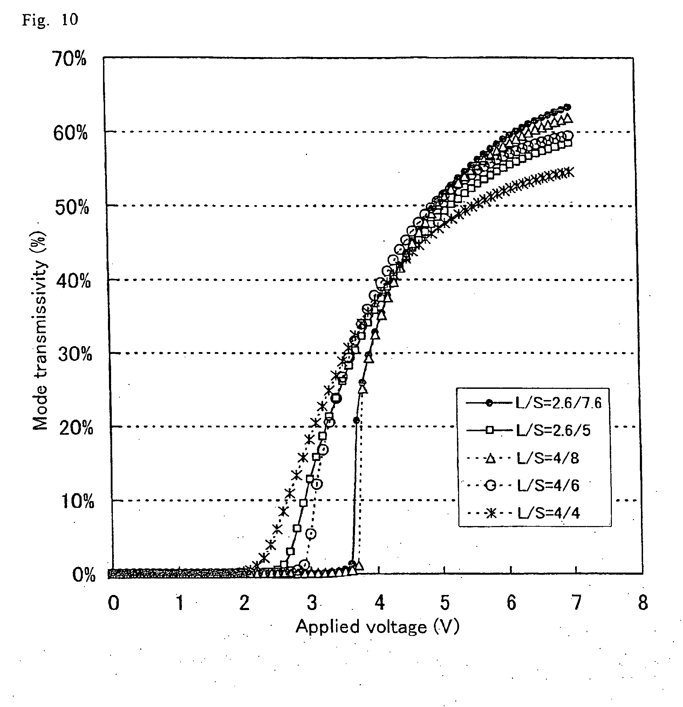

   Fig. 10 is a voltage vs. transmissivity graph of the liquid crystal display device of Example 4.
[Fig. 11]

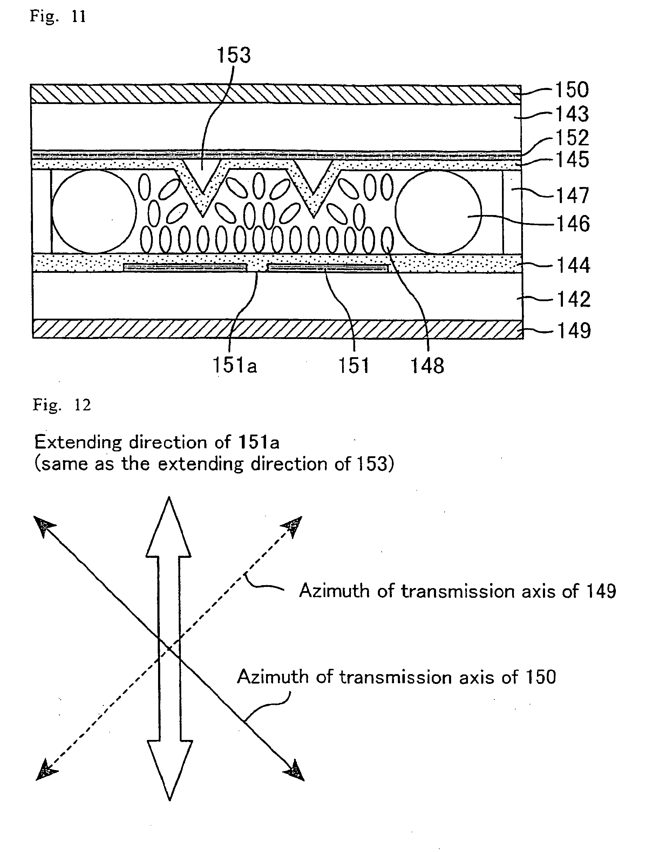

   Fig. 11 is a schematic cross-sectional view showing the basic structure of the MVA liquid crystal display element of Comparative Example 2.
[Fig. 12]
   Fig. 12 is a plan view for describing the azimuths of the transmission axes and the direction of applying an electric field in the liquid crystal display device of Comparative Example 2.
[Fig. 13]
   Fig. 13 is a schematic cross-sectional view for describing the liquid crystal alignment when an electric field is applied in the MVA liquid crystal display element of Comparative Example 2.
[Fig. 14]
   Fig. 14 is a graph showing the preferable range of the electrode width L and the electrode spacing S in the present invention.
[Fig. 15]

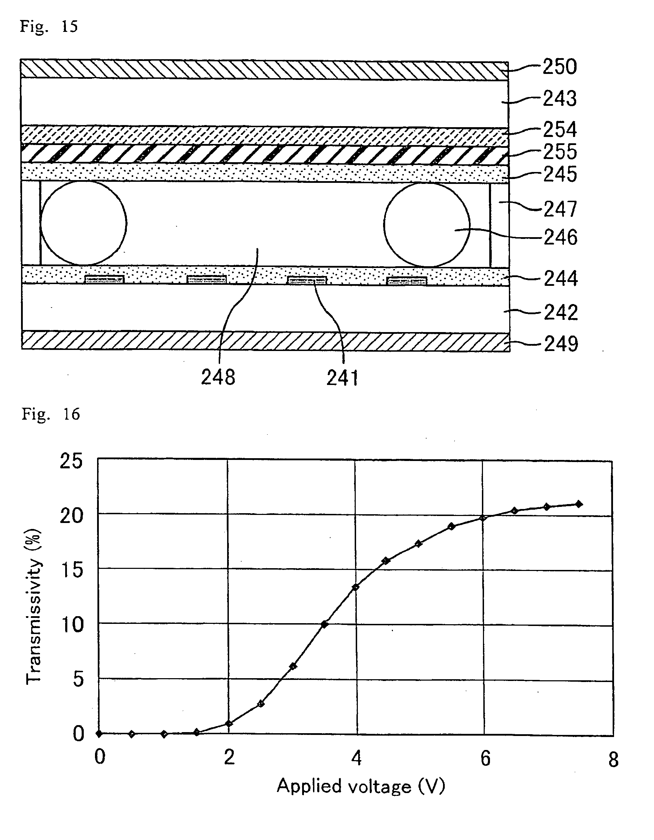

   Fig. 15 is a schematic cross-sectional view showing the basic structure of the liquid crystal display element of Example 7.
[Fig. 16]
   Fig. 16 is a voltage vs. transmissivity graph of the liquid crystal display device of Example 7.

### MODE FOR CARRYING OUT THE INVENTION

The present invention will be mentioned in more detail referring to the drawings in the following embodiment, but is not limited to this embodiment.

### (Embodiment 1)

In the liquid crystal display device of the present embodiment, the distribution of electric field strength is formed in the cell when an electric field is applied; thereby, bend alignment of the liquid crystal is achieved. Further, in the liquid crystal display device of the present invention, an electric field is applied to a perpendicularly aligned p-type nematic liquid crystal (a nematic liquid crystal having positive dielectric anisotropy) in a transverse direction along the surfaces of the substrates, and this electric field application leads to bend alignment.

Fig. 1 is a schematic perspective view showing the basic structure of the liquid crystal display device of Embodiment 1. Vertical alignment layers 13 and 14 are disposed on two transparent substrates 11 and 12, respectively. A p-type nematic liquid crystal (liquid crystal molecules 15) is in homeotropic alignment when no voltage is applied. Specifically, the liquid crystal molecules 15 near the vertical alignment layers 13 and 14 are aligned so that the long axes thereof are substantially perpendicular to the substrates 11 and 12 when no voltage is applied. Thus, the pre-tilt angle of the liquid crystal molecules 15 is not required to be strictly adjusted as long as it is substantially perpendicular to the substrates. In order to obtain a high contrast ratio, the pre-tilt angle is preferably 88° or higher.

The substrates 11 and 12 may be transparent glass or plastic substrates used for common liquid crystal display devices. Specifically, the substrates preferably has a light transmissivity of 75% or higher (more preferably 90% or higher) and a haze of 5% or lower (more preferably 3% or lower). In the case that the light transmissivity is 75% or higher, the present embodiment can be used for inexpensive touch screens. In the case that the transmissivity is 90% or higher, the present embodiment can be used for liquid crystal display panels of general TFT-LCDs.

On the substrate 12 is disposed a comb-shaped electrode 16 including a comb-shaped common electrode group and a comb-shaped pixel electrode group. These electrode groups are disposed so as to face and interdigitate with each other.
The common electrode group has parallel common electrodes, and the common electrodes are connected to each other near the perimeter of the pixel (or dot). The common electrode group in every pixel receives the same signal (referred to as a common signal).
The pixel electrode group also has parallel pixel electrodes, and the pixel electrodes are connected to each other near the perimeter of the pixel (or dot). The pixel electrode group is disposed corresponding to each pixel (or dot). The pixel electrode group of each pixel receives an image signal at a predetermined timing.
The two substrates 11 and 12 are also provided with two polarizers 17 and 18, respectively, on the outer main surfaces.

Patent Document 1 discloses such a cell structure. Patent Documents 3 and 4 disclose that a bend electric field is formed by applying an electric field and two domains with their director azimuths different from each other by 180° are formed, and thereby wide-viewing-angle characteristics can be achieved.

However, the known cell structures disclosed in Patent Documents 1 to 4 have problems such as a high driving voltage and low cell transmissivity while they give excellent viewing-angle characteristics; thus, they are not in practical use.

Under such situations, the inventors have studied the above problems and have found that the degree of the bend alignment can be controlled by appropriately adjusting the electrode width and the inter-electrode distance (electrode spacing). Thereby, a high light transmissivity has been obtained at practical driving voltage for the first time.

Compared with conventional inventions, the degree of bend alignment can be freely controlled in the present invention. Thus, for example, rapid responsiveness can be achieved by the flow effects as in the case of the OCB mode; from the above respects, the present invention is of extremely high practical value.

In the OCB mode, the liquid crystal molecules transfer from the splay alignment to the bend alignment at a voltage slightly higher than the critical voltage. The bend alignment at this time shows the maximum curvature, and gradation display is performed between the bend alignment at this time and a gentle bend alignment at high-voltage application.
In contrast, in the liquid crystal display device of the present embodiment, gradation display is performed between the bend alignment with a large curvature when a high voltage is applied and the vertical alignment when no voltage is applied. The maximum curvature at this time depends on an applied voltage; the larger the electric field is, the larger the maximum curvature is. In other words, the maximum curvature upon high-voltage application can be freely controlled in accordance with the electrode width and electrode spacing. Thus, the maximum curvature upon high-voltage application can be made higher than that of the OCB mode, and a response more rapid than in the OCB mode can be achieved.
The term "curvature" herein means the "degree of bending", and is not physically defined.

If the "degree of bending" is larger than required, the bend alignment is broken as if a rod is folded. In contrast, in the present invention, the surface anchoring energy of the alignment layer is reduced and thereby more stable bend alignment can be achieved.

Fig. 2 shows the equipotential curve in the cell when a 7-V voltage is applied. At this time, the liquid crystal molecules are aligned in accordance with this distribution of electric field strength and the constraining force from the interface.

Fig. 3 shows the state at this time. The liquid crystal molecules are continuously transferred from the homeotropic alignment to the bend alignment by voltage application. In other words, the liquid crystal layer always shows the bend alignment and can rapidly respond in the response between different gradations in normal driving. Fig. 3 also shows that the degree of bend distortion is larger and thus the optical modulation rate is larger at a region where no electrode is disposed rather than at a region above the electrode (comb-shaped electrode 16).

The present invention is based on the finding that the degree of this bend alignment can be controlled by optimizing the panel structure. The present invention can increase the degree of bending to cause a high light transmissivity. Further, the liquid crystal display device of the present embodiment enables a rapid response because the flow of the liquid crystal molecules acts toward the direction assisting the movement of the liquid crystal molecules when the liquid crystal molecules are to move in the present embodiment as in the case of the OCB mode.
The present invention will be mentioned in more detail referring to the drawings in the following examples.

### (Example 1)

Fig. 4 shows a schematic cross-sectional view showing the basic structure of the liquid crystal display element of Example 1. Multiple liquid crystal display elements are produced with various electrode widths L and electrode spacings S.

First, a glass substrate 42 provided with an ITO comb-shaped electrode 41 having an electrode width L and an electrode spacing S was prepared. An alignment-layer coating JALS-204 (5 wt%, γ-butyrolactone solution, JSR Corp.) was spin-coated on the substrate, and then baked for 2 hours at 200°C. Thereby, an alignment layer 44 was formed. The alignment layer 44 was 60 nm in thickness. In the same manner, an alignment layer 45 with a thickness of 60 nm was formed on a glass substrate 43 from the same alignment-layer coating for the alignment layer 44.

Then, resin beads 46 with a diameter of 4 µm (Micropearl SP, Sekisui Chemical Co., Ltd.) were dispersed on the substrate 42, and a sealing resin 47 (STRUCTBOND XN-21-S, Mitsui Toatsu Chemicals, Inc.) was printed on the substrate 43. These substrates were bonded to each other, and baked for 3 hours at 250°C. Thereby, a liquid crystal cell was produced.

Thereafter, a liquid crystal material 48 (SD-5654, Δε = 16.2, Δn = 0.099, Chisso Corp.) was vacuum-injected into the liquid crystal cell, and polarizers 49 and 50 were bonded thereto. Thereby, multiple liquid crystal display elements of Example 1 were produced.

Fig. 5 shows the relationship between the direction of applying an electric field and the azimuths of the axes of the polarizers 49 and 50 in this case. As shown, the polarizers 49 and 50 were disposed in a crossed Nicols state, and the electric field was applied in the direction bisecting the angle formed by the transmission axes of the polarizers 49 and 50.

Fig. 6 shows the maximum transmissivity of each liquid crystal display element at room temperature (25°C) when a 30-Hz square wave with a voltage of 0 to 20 V was applied. The transverse axis indicates the ratio of the area which contributes to the transmissivity in the cell. In the formula, the value of 1.7 is an experimental value, and this value indicates that the region between the electrode edge and the part apart from the electrode edge by 1.7 µm contributes to improvement of the transmissivity. The numbers in the figure each represent the electrode width L/electrode spacing S.

Here, the electrode width L represents the width at the portion where the common electrode and the pixel electrode face each other (the length in the lateral direction). The electrode spacing S represents the distance between a common electrode and an adjacent pixel electrode at the portion where the common electrode and the pixel electrode face each other.

As shown in Fig. 6, the larger the value of (S+1.7)/(S+L) is, the higher the maximum transmissivity is.
The current MVA mode gives a mode transmissivity of about 80%; however, the transmissivity of the liquid crystal layer is reduced to 50% or lower due to loss of the light amount caused by rib regions or other factors. In actual liquid crystal panels (MVA mode), the panel transmissivity is given by multiplying the pixel aperture ratio, color filter transmissivity, and polarizer transmissivities. Thus, the panel transmissivity is reduced to 4 to 5%.

As a result, what is important is how to increase the light transmissivity of the liquid crystal layer (or mode transmissivity) as high as possible.
The display mode of the present invention does not require ribs. Thus, a practical display mode can be achieved in the case that the light transmissivity of the liquid crystal layer is 50 to 55% or higher. A mode transmissivity of about 50% or higher as mentioned above is at the same level as the panel transmissivity of the current display mode (e.g. the MVA mode), and gives a brighter (less energy-consuming) liquid crystal display device. Even if a mode transmissivity is lower than 50%, the present invention is of great practical value because of its simple panel structure and low production cost.

In order to simply increase the transmissivity, it may be sufficient to widen the electrode spacing S; however, widening of the electrode spacing S increases response time.

Fig. 6 shows that the transmissivity can be increased by increasing the value of (S+1.7)/(S+L) without widening the electrode spacing S; the present invention clarifies this advantage for the first time.

Fig. 7 shows the temperature dependency of the responsiveness in the case that the electrode width L is 4 µm and the electrode spacing is 4 µm. As is evident from this figure, the present invention gives a rapid response even at low temperatures; thus, the present invention is of great practical value.

The reason why the liquid crystal display element in the liquid crystal display device of the present invention gives a rapid response is that the liquid crystal molecules are rotated and bend-distorted by voltage application.

As shown in Fig. 8, a flow (in the direction indicated by an arrow in Fig. 8) occurs in the liquid crystal layer when a voltage is applied. Here, rotations occur in counter directions which are symmetrical about the disclination line (dark line) at substantially the center between the adjacent common electrode and pixel electrode. Around the disclination line, torques act in the same direction. Thus, in contrast to the TN mode and the MVA mode, no trouble occurs that one flow in the liquid crystal layer inhibits another flow. Thereby, the present embodiment can achieve a rapid response as in the case of the OCB mode.

Such rapid responsiveness corresponds to the degree of bending (curvature). This degree of bending depends on the physical properties of the liquid crystal material (especially dielectric anisotropy Δε and elastic constant); it also depends on the properties of the comb-shaped electrode such as the electrode width L and electrode spacing S, and the liquid crystal layer thickness (cell gap). In other words, the degree of bending can be freely controlled in the present invention in accordance with the distribution of electric field strength in the cell. Thus, a more rapid response than that of the OCB mode can be achieved.

Hereinabove, the liquid crystal material used was SD-5654 (Δε = 16.2, Δn = 0.099, Chisso Corp.) and the experimental results described were about the test cell (cell gap: 4 µm) with 4-µm-diameter beads dispersed therein. The following will describe the experimental results about other systems.

Except that MJ08420X (Δε = 18.9, Δn = 0.10, Merck KGaA) was used as the liquid crystal material and beads having a diameter of 3.4 µm were dispersed, test cells (cell gap: 3.4 µm) with various electrode widths L/electrode spacings S were produced in the same manner as in the above method. The voltage-transmissivity characteristics thereof were determined at each electrode width L/electrode spacing S. The following table shows the transmissivity at an applied voltage of 6 V.

**[Table 1]**

| Electrode width (L)/ *µ*m | Electrode distance (S)/ *µ*m | S/L | (S+1.7)/(S+L) | Transmissivity at 6V voltage (%) |
|---|---|---|---|---|
| 4 | 3 | 0.75 | 0.67 | 46 |
| 4 | 4 | 1 | 0.71 | 52 |
| 4 | 6 | 1.5 | 0.77 | 59 |
| 4 | 8 | 2 | 0.81 | 60 |
| 4 | 10 | 2.5 | 0.84 | 62 |
| 4 | 12 | 3 | 0.86 | 65 |
| 4 | 15 | 3.75 | 0.88 | 67 |
| 3 | 3 | 1 | 0.78 | 58 |
| 3 | 6 | 2 | 0.86 | 61 |
| 3 | 9 | 3 | 0.89 | 68 |
| 3 | 12 | 4 | 0.91 | 70 |
| 3 | 15 | 5 | 0.93 | 71 |
| 6 | 3 | 0.5 | 0.52 | 40 |
| 6 | 5 | 0.83 | 0.61 | 48 |
| 6 | 7 | 1.17 | 0.67 | 51 |
| 6 | 9 | 1.5 | 0.71 | 55 |
| 6 | 12 | 2 | 0.76 | 60 |
| 6 | 15 | 2 | 0.8 | 63 |

The table shows that this system also gives a transmissivity of 50% or higher under normal driving conditions (about several volts) with the range of (S+1.7)/(S+L) ≥ 0.7.

As mentioned above, the transmissivity increases as the electrode spacing S is increased; however, the effects to be obtained gradually approach saturation as the electrode spacing S is increased. Specifically, the driving voltage increases and the responsiveness decreases as the electrode spacing S is increased. Thus, it is not appropriate to increase the electrode spacing S more than necessary.

Except that MJ0844X (Δε = 20.0, Δn = 0.12, Merck KGaA) was used as the liquid crystal material and beads having a diameter of 3.1 µm were dispersed, test cells (cell gap: 3.1 µm) with various ratios of electrode spacing S/electrode width L were produced in the same manner as in the above method. The voltage-transmissivity characteristics thereof and the response time were determined at each ratio of electrode spacing S/electrode width L. The following table shows the results. The transmissivity was determined at an applied voltage of 6.5 V.

**[Table 2]**

| S/L | Transmissivity at 6V voltage (%) | Decay response time (ms) |
|---|---|---|
| 2.5 | 62 | 4.8 |
| 3 | 65 | 5.2 |
| 3.5 | 67 | 5.5 |
| 3.75 | 67 | 6 |
| 4 | 62 | 12.3 |
| 4.5 | 56 | 22.8 |
| 5 | 48 | 30 |

The table shows that the response time increases and the transmissivity decreases when the ratio of the electrode spacing S/electrode width L is greater than 3.75. Thus, the display characteristics are contrarily deteriorated as the electrode spacing S is increased more than necessary. Here, the reduction in the transmissivity is due to reduction in the electric field caused by the increase in the electrode spacing S.

If the electrode width L is constant, the response speed and the transmissivity are in the trade-off relationship. The smaller the electrode width L is, the more rapid the response is and the higher the transmissivity is. Under constraints in the process, however, the lower limit of the electrode width L is currently 2 to 2.5 µm. In such a situation, the electrode width L is suitably 2.5 µm and the electrode spacing S is suitably 7 to 8 µm. These values give the most-balanced rapid response and high transmissivity under the constraints of the current process. In this case, the ratio (S/L) between the electrode spacing S and the electrode width L is 2.8 to 3.2.

In the case that the electrode width L is 2 µm and the electrode spacing S is 8 µm, the ratio S/L is 4. As shown in Table 2, the ratio S/L of 4 gives a response time of 12.8 ms; this time is shorter than the practical response time of 16 ms. Thus, the ratio S/L of 4 also enables a response within one frame.

As mentioned above, the ratio S/L is preferably 4 or lower in order to ensure a practical response time; it is preferably 3.75 or lower in order to effectively reduce the response time; and it is preferably 3.2 or lower in order to satisfy the aforementioned electrode width L and electrode spacing S (L = 2.5 µm, S = 7 to 8 µm) under the constraints of the existing process.

### (Example 2)

A liquid crystal cell having the same basic structure as that shown in Fig. 4, an electrode width L of 4 µm, an electrode spacing S of 4 µm, and a cell gap of 4 µm was produced in the following manner.

First, a glass substrate 42 having an ITO comb-shaped electrode 41 was prepared. The substrate was immersed for 5 minutes in a 0.01 mol/l solution of a silane coupling material represented by CF₃-(CF₂)₁₇-SiCl₃ in a mixture of chloroform-NMP (ratio of chloroform:NMP (volume ratio) = 1:10), and then dried for 1 hour at 120°C in dry nitrogen. Thereby, an alignment layer 44 (surface anchoring energy: 5×10⁻⁵ J/m²) was formed.

In the same manner and with the same alignment layer material as for the alignment layer 44, an alignment layer 45 was formed on a glass substrate 43. Then, resin beads 46 with a diameter of 4 µm (Micropearl SP, Sekisui Chemical Co., Ltd.) were dispersed on the substrate 42, and a sealing resin 47 (STRUCTBOND XN-21-S, Mitsui Toatsu Chemicals, Inc.) was printed on the substrate 43. These substrates were bonded to each other and then baked for 3 hours at 250°C. Thereby, a liquid crystal cell was produced.

A liquid crystal material 48 (ZLI-2293, Δε = 10, Δn = 0.136, Merck KGaA) was vacuum-injected into the liquid crystal cell, and polarizers 49 and 50 were attached thereto. Thereby, a liquid crystal display element of Example 2 was produced.

The relationship between the direction of applying an electric field and the axis azimuths of the polarizers 49 and 50 in this case was the same as that in Example 1 shown in Fig. 5.

The liquid crystal display element of Example 2 had a maximum transmissivity of 53%, and was capable of brighter display than the rib-structured MVA mode with a transmissivity of 42%. Thus, it is of very high practical value.

### (Comparative Example 1)

Except that a liquid crystal material having properties of Δε = 15, Δn = 0.1, k11 = 11.2 pN, k22 = 5.2 pN, and k33 = 15.6 pN was used, L/S was 10 µm/14 µm, and the cell gap was 7 µm, a liquid crystal display element of Comparative Example 1 with the same structure as that in Example 1 was produced.

Then, a 30-Hz square wave at 0 to 20 V was applied to the liquid crystal display element, and the maximum transmissivity at that time was measured; the value was 34%. In addition, the rise response time upon 7-V-voltage application was 20 ms and the response time upon termination of the 7-V-voltage application was 25 ms; the liquid crystal display element showed insufficient responsiveness.

Here, k11, k22, and k33 represent elastic constants of splay, twisted, and bent alignments, respectively.

### (Example 3)

Liquid crystal display elements A to E of Example 3 were produced in the same manner as in Example 1. The display elements each had a different electrode width L and electrode spacing S, and had a liquid crystal layer thickness of 4 µm.

Fig. 9 is a schematic cross-sectional view showing the basic structure of the liquid crystal display elements of Example 3.

In the case that the common electrode group and the pixel electrode group are disposed on the same plane, the possibility of short circuit occurrence increases as the electrode spacing S becomes smaller. Thus, in the present Example, a SiNx film (thickness: 2 µm) was formed as an insulator between the common electrode group and the pixel electrode group by vacuum evaporation.

The liquid crystal material used in the experiment was a Merck-made liquid crystal material, and had physical properties of a dielectric anisotropy Δε = 21 and a birefringence Δn = 0.11.

The method of producing each of the liquid crystal display elements A to E was mentioned hereinbelow.

First, a glass substrate 92 was prepared and a common electrode group 91 was formed on the substrate. A SiNx layer 93 was vacuum-evaporated thereon, and a pixel electrode group 94 was formed thereon. The thus-obtained glass substrate 92 having an ITO comb-shaped electrode was immersed for 5 minutes in a 0.01 mol/l solution of a silane coupling material represented by the formula CF₃-(CF₂)₁₇-SiCl₃ in chloroform-NMP mixed solution (mixing ratio (volume ratio) of chloroform:NMP = 1:10). Then, the substrate was dried for an hour at 120°C in dry nitrogen. Thereby, an alignment layer 95 was formed.
In the same manner and with the same material as that for the alignment layer 95, an alignment layer 97 was formed on a glass substrate 96.
Thereafter, resin beads 98 having a diameter of 4 µm (Micropearl SP, Sekisui Chemical Co., Ltd.) were dispersed on the substrate 92, and a sealing resin 99 (STRUCTBOND XN-21-S, Mitsui Toatsu Chemicals, Inc.) was printed on the substrate 96. These substrates were bonded to each other and baked for 3 hours at 250°C. Thereby, a liquid crystal cell was produced.
A liquid crystal material 100 (Δε = 21, Δn = 0.106, Merck KGaA) was vacuum-injected in the cell, and then polarizers 101 and 102 were attached thereto. Thereby, the liquid crystal display element of Example 3 was produced.
The direction of applying an electric field and the axis azimuths of the polarizers 101 and 102 in this case satisfied the same relationship as that in the case of Example 1 shown in Fig. 5.

The following table shows the electrode patterns, maximum transmissivities, and decay response times upon termination of the 6V-voltage application of the liquid crystal display elements A to E.

**[Table 3]**

| Liquid crystal element | Electrode width (L/*µ*m) | Electrode distance (S/*µ*m) | (S+1.7)/(S+L) | Maximum transmissivity (%) | Decay response time (ms) |
|---|---|---|---|---|---|
| A | 1 | 3 | 1.2 | - | - |
| B | 2 | 6 | 0.96 | 75 | 6 |
| C | 3 | 9 | 0.89 | 70 | 15 |
| D | 4 | 12 | 0.86 | 62 | 24 |
| E | 5 | 15 | 0.84 | 53 | 42 |

The liquid crystal display element A has too narrow an electrode width L, and a break occurred. Thus, the liquid crystal display element A was not capable of serving as a liquid crystal display element.
The liquid crystal display elements B to D each had high transmissive characteristics and a tolerable response time.
The liquid crystal display element E had a slow decay response, and did not have practical display characteristics.

The alignment layers used in the present examples were mere examples, and usual polyimide alignment layers and inorganic alignment layers, which align liquid crystal molecules by their surface shapes, may be also applicable of course.

Nevertheless, a monomolecular adsorption film enables extremely simple film-forming process in that a uniform alignment layer can be obtained only by immersing the substrate in a solution.
In the conventional display modes, a predetermined pre-tilt angle is required to be formed; however, it is not easy to control the pre-tilt angle with a monomolecular adsorption film. In contrast, in the display mode of the present invention, liquid crystal molecules are only required to be substantially perpendicularly aligned. Thus, the monomolecular adsorption film is very suitable for the display mode of the present invention which does not require precise control of the pre-tilt angle.
The monomolecular adsorption film is a molecular-level microfilm, and less causes voltage loss due to an alignment film. Thus, the monomolecular adsorption film is also suitable for the display mode of the present invention in this respect.

### (Example 4)

Except that MJ08356 (Δε = 20, Δn = 0.1, Merck KGaA) was used as the liquid crystal material and beads having a diameter of 3.7 µm were dispersed, test cells (cell gap: 3.7 µm) with various electrode widths L/electrode spacings S were produced in the same manner as in Example 1. The voltage-transmissivity characteristics thereof were determined at each electrode width L/electrode spacing S. Here, the liquid crystal layer had a retardation Rth of 260 nm in the thickness direction.

Fig. 10 is a graph showing the voltage-transmissivity (mode transmissivity) characteristics of the liquid crystal display device of Example 4.

Fig. 10 shows that the maximum transmissivity was likely to increase as the value of the electrode spacing S/electrode width L (S/L) increased, and the rise became steeper around the threshold voltage and the gradation characteristics were deteriorated at low brightness regions.

In order to solve these problems, it is effective to form a region where the voltage-transmissivity characteristics mildly increase around the threshold voltage, that is, where the S/L value is relatively small, in the pixel region. At this region, the maximum transmissivity is reduced but the gradation characteristics at low brightness are greatly improved in comparison with a region where the S/L value is relatively large. Thus, the liquid crystal display device including regions each having a different S/L value is of a much greater practical value.

Further, with a single S/L value design, electrodes may not just fit in a pixel. In contrast, combination use of two or more S/L values leads to effective use of the pixel region. Specifically, it is possible to kill dead space which is to be formed if the pixel has no space where a pair of electrodes can fit thereinto.

Here, it is not especially restricted how many regions each having a different S/L value are disposed in a single pixel region. It is preferably decided according to the viewing angle characteristics.

### (Example 5)

A liquid crystal display element of Example 5 was produced with the same structure as that in the schematic cross-sectional view of Fig. 4.

The electrode width L and the electrode spacing S were 3.0 µm and 5.0 µm, respectively, and the cell gap was 3.0 µm. That is, the value of (S+1.7)/(S+L) was set to about 0.84.

The liquid crystal display element was produced in the same manner as in Example 1. A liquid crystal material MJ081029 (Δε = 22.5, Δn = 0.100, Merck KGaA) was vacuum-injected in the display element, and polarizers 49 and 50 were attached thereto.

The direction of applying an electric field and the axis azimuths of the polarizers 49 and 50 in this case satisfied the same relationship as that in the case of Example 1 shown in Fig. 5.

The thus-obtained liquid crystal display element was subjected to application of a 30-Hz square wave at 0 to 6 V, and the maximum transmissivity at room temperature (25°C) was measured; the value was 62%.
In the case that a liquid crystal display device is assembled including the liquid crystal display element of the present example similarly to the case of assembling a common liquid crystal display device, the brightness of the liquid crystal display device is estimated based on this value as follows.

In the case that a polarizer has a transmissivity of 40%, a color filter has a transmissivity of 35%, the pixel aperture ratio is 55%, and the backlight brightness is 5,000 cd/m², the panel front brightness is 239 cd/m². This is a suitable brightness value for devices such as laptop computers. Of course, a brighter backlight can be applied to devices such as televisions which require higher brightness.

### (Comparative Example 2)

As a comparative example to Example 5, an MVA liquid crystal display element having the structure of Fig. 11 was produced.

First, a glass substrate 142 was prepared on which a transparent electrode 151 provided with an opening 151a having a width of 3.0 µm was formed. An alignment layer coating JALS-204 (5 wt%, γ-butyrolactone solution, JSR Corp.) was spin-coated on the glass substrate 142, and baked for 2 hours at 200°C. Thereby, an alignment layer 144 was formed. The alignment layer 144 had a thickness of 60 nm in this case.

On the other hand, a glass substrate 143 having a transparent electrode 152 was prepared. A protrusion 153 extending in the direction perpendicular to the paper surface in Fig. 11 was formed by a photolithographic technique. Then, an alignment layer coating JALS-204 (5 wt%, γ-butyrolactone solution, JSR Corp.) was spin-coated on the glass substrate 143, and baked for 2 hours at 200°C. Thereby, an alignment layer 145 was formed. The alignment layer 145 has a thickness of 60 nm in this case.

Next, resin beads 146 having a diameter of 4.0 µm (Micropearl SP, Sekisui Chemical Co., Ltd.) were dispersed on the substrate 142, and a sealing resin 147 (STRUCTBOND XN-21-S, Mitsui Toatsu Chemicals, Inc.) was printed on the substrate 143. These substrates were bonded to each other and baked for 3 hours at 250°C. Thereby, a liquid crystal cell was produced.

A liquid crystal material 148 (MLC-6608, Δε = -4.2, Δn = 0.083, Merck KGaA) was vacuum-injected in the cell and polarizers 149 and 150 were attached thereto. Thereby, a liquid crystal display element of Comparative Example 2 was produced.

Fig. 12 shows the relationship between the extending direction of the opening 151 (the same direction as that of the protrusion 153) and the axis azimuths of the polarizers 149 and 150 in this case.

Then, a 6-V voltage was applied to the upper and lower electrodes (transparent electrodes 151 and 152). The light transmissivity in this case was 45%. Fig. 13 schematically shows the state of rotation of the liquid crystal molecules 148 at that time.

In the current MVA mode, if a polarizer has a transmissivity of 40%, a color filter has a transmissivity of 35%, the pixel aperture ratio is 55%, and the backlight brightness is 5,000 cd/m², the panel front brightness is disadvantageously 173 cd/m². Thus, in the current MVA mode, one or more brightness-enhancing film is disposed to the backlight and thereby the brightness was increased to about 250 cd/cm².

As shown by the results of Example 5 and Comparative Example 2, the liquid crystal display element of Example 5 can give a high light transmissivity, and a brightness-enhancing film which may cause an increase in cost is not required. Thus, the display element is of an extremely large practical value.

### (Example 6)

A liquid crystal display element of Example 6 was produced with the same structure as that of the schematic cross-sectional view shown in Fig. 4.

The electrode width L and the electrode spacing S were 2.5 µm and 8.0 µm, respectively, and the cell gap was 3.3 µm. That is, the value of (S+1.7)/(S+L) was set to about 0.92.

The liquid crystal display element was produced in the same manner as in Example 1. A liquid crystal material MJ072330 (Δε = 22.3, Δn = 0.1220, Merck KGaA) was vacuum-injected in the display element, and polarizers 49 and 50 were attached thereto.

The direction of applying an electric field and the axis azimuths of the polarizers 49 and 50 in this case satisfied the same relationship as that in the case of Example 1 shown in Fig. 5.

The thus-obtained liquid crystal display element was subjected to application of a 30-Hz square wave at 0 to 6 V, and the maximum transmissivity at room temperature (25°C) was measured; the value was 72%.
In the case that the liquid crystal display element of the present example is used for a liquid crystal display device similar to the case of a common liquid crystal display device, the brightness of the liquid crystal display device is estimated based on this value as follows.
In the case that a polarizer has a transmissivity of 40%, a color filter has a transmissivity of 35%, the pixel aperture ratio is 55%, and the backlight brightness is 5,000 cd/m², the panel front brightness is 277 cd/m². This value is larger by about 16% than the brightness of 239 cd/cm² achieved in Example 5.

A current 40-inch liquid crystal television is provided with about 15 to 20 cold cathode fluorescent lamps (CCFLs). Thus, the value shows that the number can be reduced by 2 or 3 in the present example. The present example is of great practical value in the respects of resource savings and low cost.

### (Example 7)

Fig. 15 is a schematic cross-sectional view showing the basic structure of a liquid crystal display element of Example 7.

A glass substrate 242 (lower glass substrate) having an ITO comb-shaped electrode 241 with the electrode width L of 2.6 µm and the electrode spacing S of 5.0 µm was prepared. An alignment layer coating JALS-204 (5 wt%, γ-butyrolactone solution, JSR Corp.) was spin-coated on the glass substrate, and then baked for 2 hours at 200°C. Thereby, an alignment layer 244 (lower alignment layer) was formed. The alignment layer 244 had a thickness of 60 nm in this case.

A glass substrate 243 (upper substrate) with a 2.0-µm-thickness green color filter 254 formed thereon was prepared, and a flattening layer 255 formed from a UV-curable acrylate (ε = 3.7) (organic insulator) was formed on the glass substrate with a thickness of 300 nm.

Similar to the side of the substrate 242, an alignment layer 245 (upper alignment layer) having a thickness of 60 nm was formed from JALS-204.

Next, resin beads 246 having a diameter of 3.7 µm (Micropearl SP, Sekisui Chemical Co., Ltd.) were dispersed on the substrate 242, and a sealing resin 247 (STRUCTBOND XN-21-S, Mitsui Toatsu Chemicals, Inc.) was printed on the substrate 243. These substrates were bonded to each other and baked for 3 hours at 250°C. Thereby, a liquid crystal cell was produced.

A liquid crystal material 248 (MJ08356, Δε = 20, Δn = 0.1, Merck KGaA) was vacuum-injected in the cell and polarizers 250 (upper polarizer) and 249 (lower polarizer) were attached to the cell. Thereby, the liquid crystal display element of Example 7 was produced.

The direction of applying an electric field and the axis azimuths of the two polarizers 249 and 250 satisfy the same relationship as that of Example 1 shown in Fig. 5 in this case. That is, the two polarizers are disposed in a Crossed Nicols state, and an electric field is applied in the direction bisecting the angle formed by the transmission axes of the polarizers 249 and 250.

Fig. 16 is a graph showing the voltage-transmissivity characteristics of the liquid crystal display element of Example 7.

The results in Fig. 16 show that the present invention was capable of further lowering a voltage compared with the results of white squares (□) (L/S = 2.6/5) in Fig. 10. This is presumably because as follows: the line of electric force enters the side of the substrate 243 owing to the organic insulator (flattening layer 255) formed on the side of the substrate 243, and thus the liquid crystal molecules are likely to rotate to the vicinity of the alignment layer 245 on the side of the substrate 243.

In the present invention, the material of the flattening layer 255 was a UV-curable acrylate. The material of the flattening layer 255 can be organic layers including unsaturated carboxylic acids, such as acrylic acid and methacrylic acid, or esters thereof; or amides, such as acryl amide and methacryl amide, or derivatives thereof, of course. Also suitable as the material of the flattening layer are flattening resins (overcoats) such as heat-melting polyimide resins.

The present application claims priority to Patent Application No. 2008-168593 filed in Japan on June 27, 2008 under the Paris Convention and provisions of national law in a designated State.

### EXPLANATION OF SYMBOLS

11, 12, 42, 43, 92, 96, 142, 143, 242, 243: Substrate
13, 14, 44, 45, 95, 97, 144, 145, 244, 245: Alignment layer
15, 48, 100, 248: Liquid crystal (p-type nematic liquid crystal)
16, 41, 91, 94, 241: Electrode (comb-shaped electrode)
17, 18, 49, 50, 101, 102, 149, 150, 249, 250: Polarizer
46, 98, 146, 246: Spherical spacer
47, 99, 147, 247: Seal
93: Insulator
148: Liquid crystal (n-type liquid crystal)
151, 152: Transparent electrode
151a: Opening
153: Protrusion (rib)
254: Color filter
255: Flattening layer

## Claims

1. A liquid crystal display device, comprising:
two substrates (11, 12, 42, 43, 92, 96, 242, 243) at least one of which is transparent; and
a p-type nematic liquid crystal (15, 48, 100, 248) disposed between the two substrates (11, 12, 42, 43, 92, 96, 242, 243),
the p-type nematic liquid crystal (15, 48, 100, 248) being aligned perpendicular to the surfaces of the two substrates (11, 12, 42, 43, 92, 96, 242, 243) when no voltage is applied,
at least one of the two substrates (11, 12, 42, 43, 92, 96, 242, 243) having a comb-shaped electrode (16, 41, 91, 94, 241), wherein the comb-shaped electrode (16, 41, 91, 94, 241) includes a common electrode group and a pixel electrode group, and
the comb-shaped electrode (16, 41, 91, 94, 241) satisfying the relationship (S+1.7)/(S+L) ≥ 0.7, wherein L represents an electrode width and S represents an electrode spacing, **characterized in that**
the electrode spacing S is 10 µm or smaller.

2. The liquid crystal display device according to claim 1,
wherein a pixel has a first region; and a second region which has a ratio S/L between the electrode width L and the electrode spacing S different from that of the first region.

3. The liquid crystal display device according to claim 2,
wherein the first region or the second region has an opening area occupying 50% or more of a pixel opening area.

4. The liquid crystal display device according to any one of claims 1 to 3, wherein the electrode width L and the electrode spacing S satisfy the relationship S/L ≤ 3.75.

5. The liquid crystal display device according to any one of claims 1 to 4, wherein the electrode width L is 2 µm or greater.

6. The liquid crystal display device according to any one of claims 1 to 5, wherein the electrode width L is 4 µm or smaller.

7. The liquid crystal display device according to any one of claims 1 to 6. wherein the common electrode group and the pixel electrode group are disposed via an insulating layer (93).

8. The liquid crystal display device according to any one of claims 1 to 7, wherein the electrode width L and the electrode spacing S satisfy the relationship (S+1.7)/(S+L) ≥ 0.8.

9. The liquid crystal display device according to any one of claims 1 to 8, wherein the electrode width L and the electrode spacing S satisfy the relationship (S+1.7)/(S+L) ≥ 0.9.

## Patentansprüche

1. Eine Flüssigkristallanzeigevorrichtung mit:
zwei Substraten (11, 12, 42, 43, 92, 96, 242, 243) von denen mindestens eines transparent ist; und
einem nematischen Flüssigkristall (15, 48, 100, 248) vom p-Typ, welcher zwischen den beiden Substraten (11, 12, 42, 43, 92, 96, 242, 243) angeordnet ist,
wobei der nematische Flüssigkristall (15, 48, 100, 248) vom p-Typ senkrecht zu den Oberflächen der beiden Substrate (11, 12, 42, 43, 92, 96, 242, 243) ausgerichtet ist, wenn keine Spannung angelegt ist,
mindestens eines der Substrate (11, 12, 42, 43, 92, 96, 242, 243) eine kammförmige Elektrode (16, 41, 91, 94, 241) hat, wobei die kammförmige Elektrode (16, 41, 91, 94, 241) eine gemeinsame Elektrodengruppe und eine Pixelelektrodengruppe umfasst, und
die kammförmige Elektrode (16, 41, 91, 94, 241) das Verhältnis (S+1.7)/(S+L) ≥ 0.7 erfüllt, wobei L eine Elektrodenbreite darstellt und S einen Elektrodenabstand darstellt, **gekennzeichnet dadurch, dass**
der Elektrodenabstand S 10 µm oder geringer ist.

2. Die Flüssigkristallanzeigevorrichtung gemäß Anspruch 1,
wobei ein Pixel einen ersten Bereich hat; und einen zweiten Bereich, welcher ein anderes Verhältnis S/L zwischen der Elektrodenbreite L und dem Elektrodenabstand S als das des ersten Bereichs hat.

3. Die Flüssigkristallanzeigevorrichtung gemäß Anspruch 2,
wobei der erste Bereich oder der zweite Bereich eine Öffnungsfläche hat, welche 50 % oder mehr einer Pixelöffnungsfläche einnimmt.

4. Die Flüssigkristallanzeigevorrichtung gemäß einem der Ansprüche 1 bis 3,
wobei die Elektrodenbreite L und der Elektrodenabstand S das Verhältnis S/L ≤ 3.75 erfüllen.

5. Die Flüssigkristallanzeigevorrichtung gemäß einem der Ansprüche 1 bis 4,
wobei die Elektrodenbreite L 2 µm oder größer ist.

6. Die Flüssigkristallanzeigevorrichtung gemäß einem der Ansprüche 1 bis 5,
wobei die Elektrodenbreite L 4 µm oder geringer ist.

7. Die Flüssigkristallanzeigevorrichtung gemäß einem der Ansprüche 1 bis 6,
wobei die gemeinsame Elektrodengruppe und die Pixelelektrodengruppe über eine Isolationsschicht (93) angeordnet sind.

8. Die Flüssigkristallanzeigevorrichtung gemäß einem der Ansprüche 1 bis 7,
wobei die Elektrodenbreite L und der Elektrodenabstand S das Verhältnis (S+1.7)/(S+L) ≥ 0.8 erfüllen.

9. Die Flüssigkristallanzeigevorrichtung gemäß einem der Ansprüche 1 bis 8,
wobei die Elektrodenbreite L und der Elektrodenabstand S das Verhältnis (S+1.7)/(S+L) ≥ 0.9 erfüllen.

## Revendications

1. Dispositif d'affichage à cristaux liquides comprenant :
deux substrats (11, 12, 42, 43, 92, 96, 242, 243), dont l'un au moins est transparent ; et
un cristal liquide nématique du type P (15, 48, 100, 248) qui est disposé entre les deux substrats (11, 12, 42, 43, 92, 96, 242, 243),
le cristal liquide nématique du type P (15, 48, 100, 248) étant aligné perpendiculairement aux surfaces des deux substrats (11, 12, 42, 43, 92, 96, 242, 243) quand aucune tension n'est appliquée,
l'un au moins des deux substrats (11, 12, 42, 43, 92, 96, 242, 243) ayant une électrode en forme de peigne (16, 41, 91, 94, 241), étant précisé que l'électrode en forme de peigne (16, 41, 91, 94, 241) contient un groupe d'électrodes communes et un groupe d'électrodes de pixel, et
l'électrode en forme de peigne (16, 41, 91, 94, 241) satisfaisant à la relation (S+1,7)/S+L) ≥ 0,7, dans laquelle L représente une largeur d'électrode et S un écartement d'électrodes, **caractérisé en ce que** l'écartement d'électrodes S est de 10 µm ou moins.

2. Dispositif d'affichage à cristaux liquides selon la revendication 1,
étant précisé qu'un pixel a une première zone ; et une seconde zone qui présente un rapport S/L entre la largeur d'électrode L et l'écartement d'électrodes S qui est différent de celui de la première zone.

3. Dispositif d'affichage à cristaux liquides selon la revendication 2,
étant précisé que la première zone ou la seconde zone a une superficie d'ouverture qui occupe 50 % ou plus d'une superficie d'ouverture de pixel.

4. Dispositif d'affichage à cristaux liquides selon l'une quelconque des revendications 1 à 3,
étant précisé que la largeur d'électrode L et l'écartement d'électrodes S satisfont à la relation S/L ≤ 3,75.

5. Dispositif d'affichage à cristaux liquides selon l'une quelconque des revendications 1 à 4,
étant précisé que la largeur d'électrode L est de 2 µm ou plus.

6. Dispositif d'affichage à cristaux liquides selon l'une quelconque des revendications 1 à 5,
étant précisé que la largeur d'électrode L est de 4 µm ou moins.

7. Dispositif d'affichage à cristaux liquides selon l'une quelconque des revendications 1 à 6,
étant précisé que le groupe d'électrodes communes et le groupe d'électrodes de pixel sont disposés par l'intermédiaire d'une couche isolante (93).

8. Dispositif d'affichage à cristaux liquides selon l'une quelconque des revendications 1 à 7,
étant précisé que la largeur d'électrode L et l'écartement d'électrodes S satisfont à la relation (S+1,7)/S+L) ≥ 0,8.

9. Dispositif d'affichage à cristaux liquides selon l'une quelconque des revendications 1 à 8,
étant précisé que la largeur d'électrode L et l'écartement d'électrodes S satisfont à la relation (S+1,7)/S+L) ≥ 0,9.
